# EUROPEAN PATENT APPLICATION

(11) **EP 1 695 878 A1**
(43) Date of publication of application: **30.08.2006**
(21) Application number: 06003488.1
(22) Date of filing: 21.02.2006
(51) Int. Cl.: B60R 21/16, B60R 21/01, B60R 21/276, B60R 21/239

(54) **Passenger restraint system**

(30) Priority: 28.02.2005 JP 2005053672; 20.12.2005 JP 2005366631
(71) Applicant: TAKATA CORPORATION, Minato-ku, Tokyo 106-8510 (JP)
(72) Inventor: Abe, Kazuhiro, Minato-ku Tokyo 106-8510 (JP); Kumagai, Masayoshi, Minato-ku Tokyo 106-8510 (JP)
(74) Representative: Banzer, Hans-Jörg

(57) **Abstract**

A passenger restraint system is provided in which an airbag apparatus is activated according to a state of usage of a seat or a seatbelt apparatus, prediction of crash, and a state of accident together with the seatbelt apparatus. An airbag apparatus (20) includes an airbag (21), a vent hole (22) for discharging gas from the airbag (21), a vent hole cover (25) for covering the vent hole (22), and a constraining device (26) for releasably constraining the vent hole cover (25) in a state of covering the vent hole (22). In order to make an energy absorbing capability of the airbag apparatus (20) relatively low, constraint of the vent hole cover (25) by the constraining device (26) is continued, and the vent hole (22) is brought into a closed state. On the other hand, in order to make the energy absorbing capability of the airbag apparatus (20) relatively high, constraint of the vent hole cover (25) by the constraint device (26) is released to release the vent hole (22).

## Description

The present invention relates to a passenger restraint system that restrains a passenger on a seat of a vehicle such as a motor vehicle by a seatbelt apparatus and an airbag apparatus.
(i) Various types of airbag apparatus have been developed as a system for restraining a passenger on a motor vehicle seat upon crash.
   A system that predicts a crash of the vehicle and controls the airbag apparatus is known, as disclosed in Japanese Unexamined Patent Application Publication No. 10-59120.
(ii) It is also known that a vent hole is provided on an airbag to absorb an impact by allowing gas to flow out through the vent hole from the inflated airbag.

It is an object of the present invention to provide a passenger restraint system in which an airbag apparatus is operated according to a state of usage of a seat and a seatbelt apparatus, prediction of crash, a state of accident and so on in cooperation with the seatbelt apparatus.

It is another object of the present invention to provide a passenger restraint system which controls an impact absorbing capability of the airbag apparatus according to the state of usage of the seat and the seatbelt apparatus, prediction of crash, the state of accident and so on in cooperation with the seatbelt apparatus in an embodiment.

According to the present invention, this object is achieved by a passenger restraint system according to Claim 1 or Claim 3. The dependent claims define preferred or advantageous embodiments.

A passenger restraint system according to a first aspect of the invention is a passenger restraint system including a seat belt apparatus and an airbag apparatus for restraining a passenger seated on a seat of a vehicle, characterized in that a control device for controlling the seatbelt apparatus and the airbag apparatus on the basis of a detection or a prediction signal from at least one of detection means for detecting a state of usage of the seat, detection means for detecting a state of usage of the seatbelt apparatus, crash prediction means, and accident state detection means is provided.

In the passenger restraint system, the detection means for detecting the state of usage of the seat may be designed such as to detect at least one of whether or not the passenger is seated on the seat, a weight of the passenger, and a posture of the passenger.

In addition, the detection means for detecting the posture of the passenger may detect a position of at least one of the head, chest, and shoulder of the passenger.

Further, the crash prediction means may be designed so as to perform at least one of prediction of a direction of crash, prediction about whether the crash is full-lap crash or offset crash, prediction of a type of an object of crash, prediction of the size of the object of crash, prediction of a relative velocity of crash, and prediction of a relative acceleration of crash simultaneously with prediction of an occurrence of crash.

The accident state detection means may be designed to perform at least one of detection about whether the accident is crash or roll-over, detection of a portion of crash, detection of a type of crash, and detection of crash severity.

The control device may control at least one of a pretensioner force and an energy absorbing capability of the seat belt apparatus, a deployment force, the size, and an energy absorbing capability of an airbag.

A passenger restraint system according to a second aspect of the invention is a passenger restraint system including a seatbelt apparatus and an airbag apparatus for restraining a passenger seated on a seat of a vehicle, and a control device for controlling the seatbelt apparatus and the airbag apparatus respectively, characterized in that the airbag apparatus includes an airbag that is inflated in the vicinity of the passenger, a mounting member having the airbag mounted thereon, a gas generator for inflating the airbag, a vent hole for discharging gas from the airbag, a vent hole cover for closing or reducing an opening area of the vent hole, and a constraining device for releasably constraining the vent hole cover in a state of closing the vent hole or in a state of reducing the opening area, and in that the control device controls the constraining device so as to continue or release constraint of the vent hole cover by the constraining device on the basis of a detection or a prediction signal from at least one of detection means for detecting a state of usage of the seat, detection means for detecting a state of usage of the seatbelt apparatus, crash prediction means, and accident state detection means.

Again, the detection means for detecting the state of usage of the seat may be designed to detect at least one of whether or not a passenger is seated on the seat, a weight of the passenger, and a posture of the passenger.

Further, the detection means for detecting the posture of the passenger may be designed to detect a position of at least one of the head, chest, and shoulder of the passenger.

The crash prediction means may be designed to perform at least one of prediction of a direction of crash, prediction about whether the crash is full-lap crash or offset crash, prediction of a type of an object of crash, prediction of the size of the object of crash, prediction of a relative velocity of crash, and prediction of a relative acceleration of crash simultaneously with prediction of an occurrence of crash.

The accident state detection means may be designed to perform at least one of detection about whether the accident is crash or roll-over, detection of a portion of crash, detection of a type of crash, and detection of crash severity.

In the passenger restraint system according to the second aspect of the invention, a tucked portion may be formed on the airbag near the vent hole at a portion where the vent hole cover is overlapped so as to be sagged on the side of the vent hole cover.

Further, the airbag may be mounted to the mounting member in a folded state, the vent hole being arranged on the outer surface of a folded body of the airbag on an opposite side from the mounting member, the vent hole cover covering the vent hole so as to surround the outer surface on the opposite side, one end of the vent hole cover being connected to the mounting member via the constraining device and the other end thereof being releasably connected to the mounting member via connecting means, wherein the vent hole cover is connected to the portion near the vent hole between the portion overlapped with the vent hole and the other end, and the connecting means releases connection between the other end of the vent hole cover and the mounting member when the airbag is inflated.

The airbag may include at least two of the vent holes, and the vent hole cover may be provided on at least one of the vent holes.

In addition, the vent hole cover and the airbag may have an auxiliary cover therebetween that covers the vent hole. When the vent hole is blocked by the vent hole cover, the auxiliary cover is pressed against the outer surface of the airbag by the vent hole cover so that the auxiliary cover covers the vent hole. On the other hand, when the vent hole cover is released from the vent hole, the auxiliary cover is pushed by the gas pressure in the airbag and thus recedes from the outer surface of the airbag so that the vent hole becomes opened.

The vent hole may be connected to one end of a cylindrical nozzle. When the vent hole is blocked by the vent hole cover, the nozzle is disposed inside the airbag. On the other hand, when the vent hole cover is released from the vent hole, the nozzle is pushed by the gas pressure in the airbag so as to protrude outward from the airbag through the vent hole.

An inner cover may be provided that covers the vent hole from the inside of the airbag. The inner cover is connected to the vent hole cover with the vent hole disposed therebetween. When the vent hole is blocked by the vent hole cover, the inner cover covers the vent hole from the inside of the airbag. On the other hand, when the vent hole cover is released from the vent hole, the inner cover is pushed outward from the airbag through the vent hole due to the gas pressure in the airbag so that the vent hole becomes opened.

The vent hole may have a slit-like shape.

In the passenger restraint system according to the first aspect of the invention, the airbag apparatus and the seatbelt apparatus are adequately controlled according to the state of usage of the seat, the state of usage of the seatbelt apparatus, the crash prediction, or the state of accident.

The detection means for detecting the state of usage of the seat preferably detects at least one of whether or not the passenger is seated on the seat, the weight of the passenger, and the posture of the passenger.

In this case, the detection means for detecting the posture of the passenger preferably detects the position of at least one of the head, chest and shoulder of the passenger.

The crash prediction means preferably performs at least one of the prediction of the direction of crash, the prediction about whether the crash is a full-lap crash or an offset crash, the prediction of the type of the object of crash, the prediction of the size of the object of crash, the prediction of the relative velocity of crash, and the prediction of the relative acceleration of crash as well as prediction of the occurrence of crash.

The accident state detection means preferably performs at least one of detection whether the accident is crash or roll over, detection of the portion of crash, detection of the type of crash, and detection of crash severity.

In this manner, by predicting or detecting the specifics of a crash in detail, the passenger restraint system can adequately be controlled.

In the first aspect of the present invention, the control device preferably performs control of at least one of the pretensioner force and the energy absorbing capability of the seatbelt apparatus, the deployment force, the size, and the energy absorbing capability of the airbag on the basis of the detection or prediction signal. In this arrangement, the passenger can be sufficiently restrained upon accident.

In the passenger restraint system according to the second aspect, the energy absorbing capability (EA capability) of the airbag apparatus is adequately controlled depending on the state of usage of the seat, the state of usage of the seatbelt apparatus, the crash prediction, or the state of accident.

In other words, in this passenger restraint system, in order to make the EA capability of the airbag apparatus relatively low, when the gas generator is activated to inflate the airbag, the constraint of the vent hole cover by the constraining device is not released and the constraint is continued. In this arrangement, even when the airbag is inflated, the vent hole is closed by the vent hole cover, or kept in small opening area. Therefore, discharge of gas from the vent hole is controlled or constrained, and hence the EA amount by the airbag becomes relatively small.

On the other hand, in order to make the EA capability of the airbag apparatus relatively high, when the gas generator is activated to inflate the airbag, constraint of the vent hole cover by the constraining device is released. In this arrangement, when the airbag is inflated, closing of the vent hole by the vent hole cover is released or the vent hole is opened in large area. Accordingly, when the passenger crashes into the inflated airbag, gas in the airbag can be sufficiently discharged through the vent hole, and hence the relatively large EA amount is secured by the airbag.

With the provision of the tucked portion at the portion of the airbag near the vent hole and the portion where the vent hole cover is overlapped so as to be sagged on the side of the vent hole cover, when the airbag is inflated, the portion near the vent hole is swelled toward the vent hole cover by an amount corresponding to the tucked portion, so as to come into tight contact with the vent hole cover. Accordingly, gas leakage from between the vent hole cover and the airbag is prevented.

If the folded body of the airbag is retained on the mounting member by the vent hole cover, assembly and installation of the airbag apparatus may be readily achieved. Since it is not necessary to provide a member for retaining the airbag to the mounting member separately, simplification of the structure and the assembling process and a reduction of the cost of the airbag apparatus are achieved.

In this passenger restraint system, when the airbag is inflated, connection of the vent hole cover with respect to the mounting member at the other end is released, constraint of the folded body of the airbag to the mounting member by the vent hole cover is released.

At this time, when the constraint of the vent hole cover by the constraining device continues, the vent hole cover is retained on the outer surface of the airbag in a state of covering the vent hole by a connected portion between the other end of the vent hole cover with respect to the outer surface of the airbag and the constraining device, whereby discharge of gas from the vent hole is restricted or reduced.

On the other hand, when the constraint of the vent hole cover by the constraining device is released, the vent hole cover is opened like a flap by gas pressure from the vent hole, and, hence, closing of the vent hole is released or the vent hole is opened in a large area.

In the present invention, two or more the vent holes may be provided. In this case, the vent hole cover may be provided on all of the vent holes or there may exist vent holes which are not provided with the vent hole cover.

If the vent hole cover and the airbag have the auxiliary cover therebetween that covers the vent hole together with the vent hole cover, the blocked state of the vent hole is enhanced.

If the vent hole is connected to a nozzle, when the vent hole is blocked by the vent hole cover, the nozzle connected to the vent hole is disposed inside the airbag. In this case, since the nozzle is in its closed state due to being pressed against the inner surface of the airbag by the gas pressure in the airbag, the vent hole is also blocked by the nozzle. Accordingly, this enhances the blocked state of the vent hole.

On the other hand, when the vent hole cover is released from the vent hole, the nozzle is pushed outward from the airbag due to the gas pressure in the airbag. Thus, the gas flows into the nozzle and increases the diameter thereof, whereby the nozzle attains its cylindrical shape and becomes opened. As a result, the gas is released from the airbag through the nozzle.

If an inner cover covers the vent hole from the inside, when the vent hole is blocked by the vent hole cover, since the vent hole cover supports the inner cover from the outside of the airbag via the vent hole, the inner cover is tightly attached to the peripheral portion of the vent hole from the inside of the airbag and blocks the vent hole without being pushed outward from the airbag through the vent hole by the gas pressure in the airbag. Accordingly, this enhances the blocked state of the vent hole.

On the other hand, when the vent hole cover is released from the vent hole, the inner cover loses the support of the vent hole cover from the outside of the airbag. As a result, the inner cover is pushed outward from the airbag through the vent hole due to the gas pressure in the airbag. Thus, the vent hole becomes opened so that the gas in the airbag is released through the vent hole.

It is preferable that the vent hole has a slit-like shape. By giving the vent hole a slit-like shape, gas leakages through the vent hole are advantageously reduced or prevented when the vent hole is blocked by the vent hole cover.

Referring now to the drawings, an embodiment of the present invention will be described.
Fig. 1 is a side view of a portion near a passenger's seat of a motor vehicle provided with a passenger restraint system according to an embodiment of the invention.
Fig. 2 is a perspective view of an airbag apparatus of the passenger restraint system.
Fig. 3 is a cross-sectional view taken along a line II-II in Fig. 2.
Fig. 4 is an explanatory drawing illustrating a vent hole cover constraining device in Fig. 1, Fig. 4(a) being a perspective view and Fig. 4(b) being a vertical cross-sectional view.
Fig. 5 is a perspective view illustrating the airbag in an inflated state with a vent hole closed.
Fig. 6 is a cross-sectional view taken along a line VI-VI in Fig. 5.
Fig. 7 is a perspective view of the airbag in the inflated state with the vent hole opened.
Fig. 8 is a cross-sectional view taken along a line VIII-VIII in Fig. 7.
Fig. 9 is a control block diagram of the passenger restraint system according to the embodiment.
Fig. 10 is a flowchart showing the contents of control of the passenger restraint system according to the embodiment.
Fig. 11 is a flowchart showing the contents of control of the passenger restraint system according to the embodiment.
Fig. 12 is a flowchart showing the contents of control of the passenger restraint system according to the embodiment.
Fig. 13 is an explanatory drawing illustrating an airbag apparatus of a passenger restraint system according to the embodiment.
Fig. 14 is a plan view of a vent hole cover of the airbag apparatus shown in Fig. 13.
Fig. 15 is a perspective view illustrating a state in which the airbag of an airbag apparatus according to another embodiment is inflated when the vent hole is closed.
Fig. 16 is a cross-sectional view taken along a line XVI-XVI in Fig. 15.
Fig. 17 is a perspective view illustrating a state where the airbag of the airbag apparatus shown in Fig. 15 is inflated when the vent hole is opened.
Fig. 18 is a cross-sectional view taken along a line XVIII-XVIII in Fig. 17.
Fig. 19 includes cross-sectional views of the vent hole and the vicinity thereof in the airbag apparatus shown in Fig. 15.
Fig. 20 is a perspective view illustrating a state where the airbag of an airbag apparatus according to another embodiment is inflated when the vent hole is closed.
Fig. 21 is a cross-sectional view taken along a line XXI-XXI in Fig. 20.
Fig. 22 is a perspective view illustrating a state in which the airbag of the airbag apparatus shown in Fig. 20 is inflated when the vent hole is opened.
Fig. 23 is a cross-sectional view taken along a line XXIII-XXIII in Fig. 22.
Fig. 24 is a perspective view illustrating a state in which the airbag of an airbag apparatus according to another embodiment is inflated when the vent hole is closed.
Fig. 25 is a cross-sectional view taken along a line XXV-XXV in Fig. 24.
Fig. 26 includes perspective views of the vent hole and the vicinity thereof in the airbag apparatus shown in Fig. 24 as viewed from the inside of the airbag.
Fig. 27 is a cross-sectional view illustrating a state in which the airbag of the airbag apparatus shown in Fig. 24 is inflated when the vent hole is opened.
Fig. 28 is a perspective view illustrating a state in which the airbag of an airbag apparatus according to another embodiment is inflated when the vent hole is closed.
Fig. 29 is a perspective view illustrating a state in which the airbag of the airbag apparatus shown in Fig. 28 is inflated when the vent hole is opened.

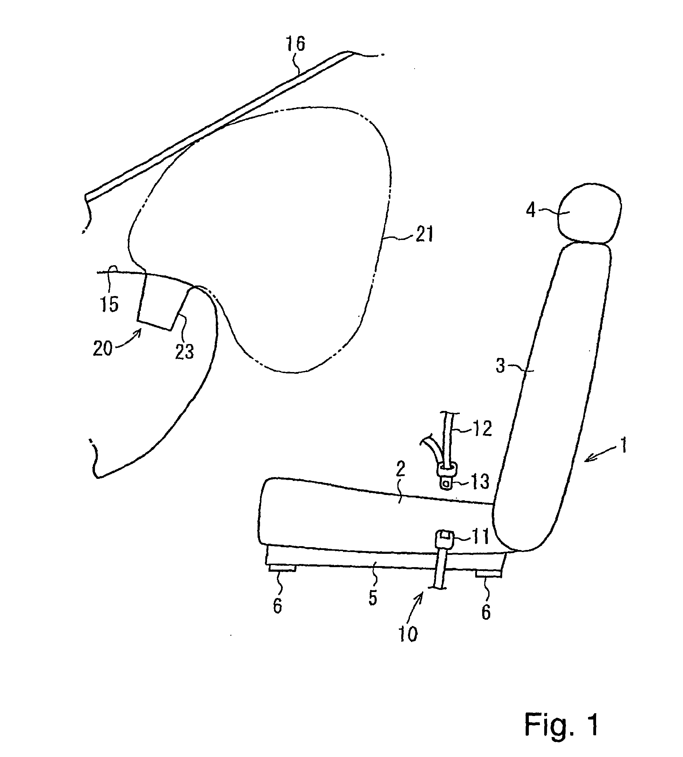

As shown in Fig. 1, a seat 1 includes a seat cushion 2, a seat back 3, and a head rest 4, and is adapted to be adjustable in position in the fore-and-aft direction along a guide rail 5. Although the seat 1 represents a passenger's seat in this embodiment, it is not limited thereto.

A weight of a passenger seated on the seat 1 is detected by a load sensor 6.

Although not shown, an image pickup apparatus and an image processing apparatus such as a CCD camera for detecting a posture of the passenger seated on the seat or recognizing a shape of an object placed on the seat cushion 2 are provided. Such detecting devices for the posture of the passenger preferably detect at least one of the head, the chest, and the shoulder of the passenger (hereinafter, these portions are generically referred to as the head or the like of the passenger).

In a case in which a child seat mounting device is installed on the seat, it may also be adapted to determine whether or not an object on the seat cushion is a child seat by detecting attachment of the child seat to the mounting device.

In a case in which a system to fix the child seat to the seat by a webbing 12 of a seatbelt apparatus 10 provided on the vehicle is employed, it may also be adapted to determine whether the object on the seat is a human body or the child seat by detecting a winding amount of the webbing 12 or a tensile strength applied to the webbing 12 and combining detected data with detected data from the load sensor.

A buckle 11 of the seat belt apparatus 10 is installed to the side of the seat 1. A tongue 13 which allows passage of the webbing 12 of the seatbelt apparatus is attached to the buckle 11.

The buckle 11 is provided with a tongue detection sensor (not shown) that detects the fact that the tongue 13 is attached. A sensor for detecting withdrawal of the webbing is provided on a retractor (not shown) for retracting the webbing 12. The retractor and the buckle 11 are provided with a pretensioner for retracting the webbing 12 by a predetermined length upon crash of the vehicle to constrain the passenger, and an EA device (energy absorbing device) for absorbing impact applied to the passenger by gradually releasing the webbing 12 when the tension applied to the webbing 12 exceeds a predetermined value.

The vehicle having the seat 1 is provided with a crash prediction apparatus including a millimetric-wave sensor, an image sensor, an infrared laser sensor, and a detecting device for detecting information on the position of the vehicle with respect to the positions of other vehicles sent from a GPS, and so on. The crash prediction is preformed in all the front, rear, left and right directions. Whether a crash will occur or not is predicted by the crash prediction apparatus. When it is predicted that a crash will occur, prediction of a direction of crash, prediction about whether the crash is a full-lap crash or an offset crash, prediction of a type of an object of crash, prediction of the size of the object of crash, prediction of a relative velocity of crash, and prediction of a relative acceleration of crash are performed.

The vehicle is further provided with an acceleration sensor and a crash sensor at a plurality of positions in addition to a detection sensor for detecting the vehicle posture including a gyroscope or the like, so that detection about whether the accident is crash or roll-over, detection of the portion of crash, detection of the type of crash, and detection of crash severity are performed when crash is actually occurred.

In this embodiment, an airbag apparatus 20 having an airbag 21 inflatable in the vicinity of the passenger seated on the seat 1 is installed on the upper portion of the instrument panel 15.

The airbag apparatus 20 includes an airbag 21, a vent hole 22 for discharging gas from the airbag 21, a container 23 which serves as a mounting member for accommodating a folded body of the airbag 21, an inflator (gas generator) 24 for inflating the airbag 21, a vent hole cover 25 for covering the vent hole 22, a constraining device 26 for releasably constraining the vent hole cover 25 in a state of covering the vent hole 22, and a module cover 27 attached to the container 23 so as to cover the folded body of the airbag 21.

The airbag 21 is inflated in front of the passenger so as to fill a space between an upper surface of the instrument panel 15 and a wind shield 16 as shown in Fig. 1. On a proximal side of the airbag 21, an opening (not numbered) for introducing gas from the inflator 24 is provided, and a peripheral portion of the opening is fixed to the container 23 by a fixing member 28.

The container 23 in this embodiment has a shape like a substantially rectangular container opened at a top surface thereof. An inflator receiving section 23a of a depressed shape is provided on a bottom surface of the container 23, and the inflator 24 is installed in this receiving portion 23a.

When mounting the airbag 21 to the container 23, the peripheral edge of the opening for introducing gas is aligned with a peripheral edge of the inflator receiving portion 23a and held down with the fixing member 28. In this case, a stud bolt 28a projecting from the fixing member 28 passes through the peripheral portion of the opening for introducing gas and the bottom surface of the container 23 and extends downward from the container 23. By tightening a nut 28b onto the stud bolt 28a, the peripheral edge of the opening for introducing gas and the fixing member 28 are fixed to the bottom surface of the container 23.

The fixing member 28 is formed with an air hole (not numbered), and gas from the inflator 24 is introduced into the airbag 21 via the air hole.

In this embodiment, the amount of gas generation from the inflator 24 is variable. A force of deployment or the size of the airbag 21 can be controlled by controlling the amount of gas generation of the inflator 24.

The vent hole 22 in this embodiment is provided at a portion of the airbag 21 inflated as shown in Fig. 1 near under a surface on the side of the wind shield 16 (a position exposed to a space near an intersection between the wind shield 16 and the top surface of the instrument panel 15).

The vent hole cover 25 of a sheet-shape is provided along an outer surface of the airbag 21 so as to cover the vent hole 22. An upper end portion of the vent hole cover 25 in this embodiment is connected with an outer surface of the airbag 21 at a position above the vent hole 22, and an lower end side thereof is extended downward so as to wrap around the outer surface and arranged outside a side surface (side surface along the surface on the side of the wind shield 16 of the airbag 21) of the container 23. Reference numeral 25a represents a seam of sewing thread which connects the upper end portion of the vent hole cover with the outer surface of the airbag.

A pin insertion portion 25b which allows insertion of a pin 26a of the constraining device 26, described later, is provided at a lower end of the vent hole cover 25. The pin insertion portion 25b in this embodiment is a portion of a loop shape which allows insertion of the pin 26a formed by bending the lower end portion of the vent hole cover 25 upward and connecting a distal end thereof with a mid section of the vent hole cover 25 with connecting means such as stitching.

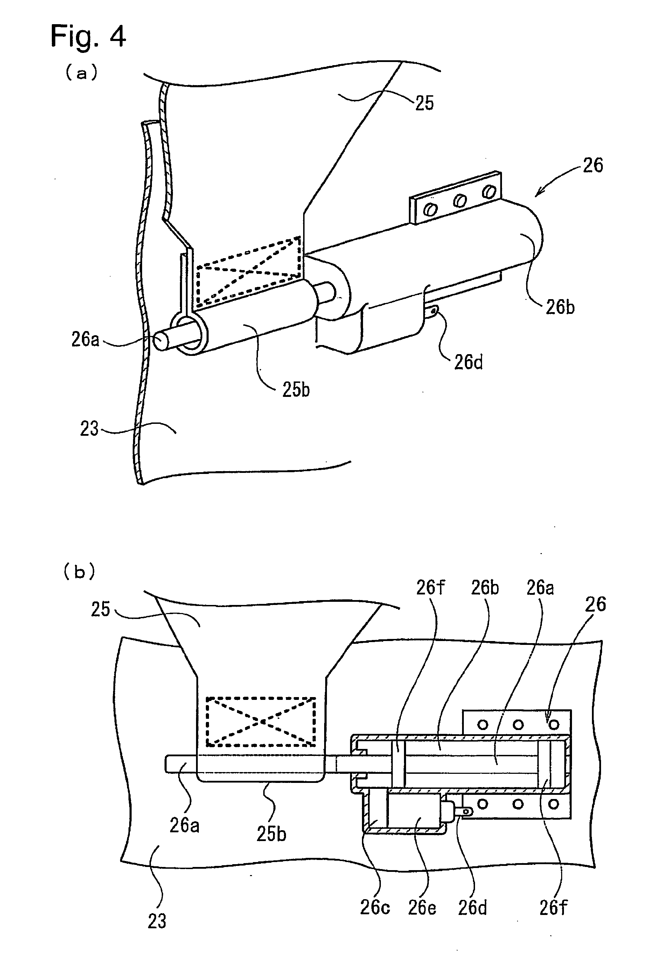

In this embodiment, as shown in Fig. 4, the vent hole cover 25 is formed of a sheet having a substantially trapezoidal shape whose upper side is wider than a lower side. In the present invention, the width of a portion covering the vent hole 22 of the vent hole cover 25 (upper side in this embodiment) is preferably larger than the diameter of the opening of the vent hole 22 by 10 mm or more.

The length of the vent hole cover 25 in the vertical direction (in the swelling direction of the airbag 21 from the container 23) corresponds to a length which does not constrain swelling of the airbag 21 from the container 23 in a state in which the lower end portion is tied up with the container 23 by the constraining device 26 (does not pull the airbag 21 toward the container 23). According to the present invention, in this case, the lower end side of the vent hole cover 25 is preferably overlapped with the side surface of the container 23 over a width of 20 mm downward from an upper edge of the container 23.

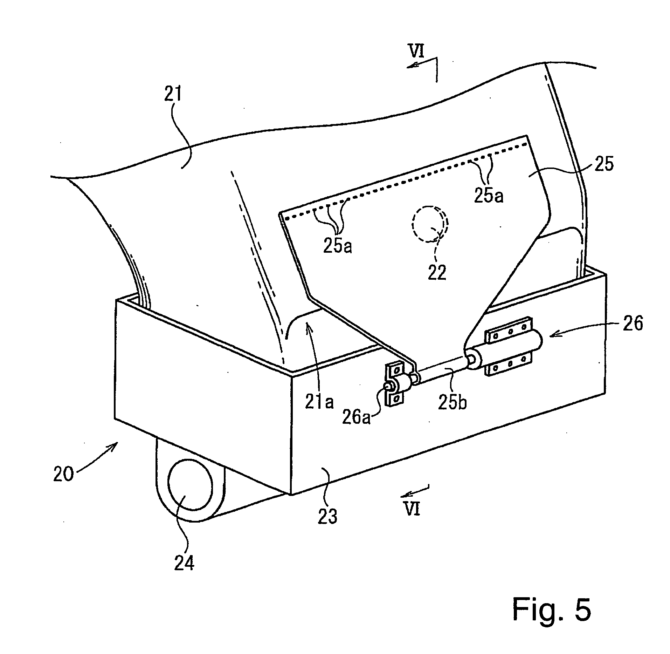

In this embodiment, as shown in Fig. 5 and so on, a tucked portion 21a is formed on a surface of the airbag 21 on the side of the wind shield 16 and on the lower side of the vent hole 22 where the vent hole cover 25 is overlapped in such a manner that a base cloth is sagged downward on the outside of the airbag 21.

The constraining device 26 having the pin 26a to be inserted into the pin insertion portion 25b of the vent hole cover 25 is installed on the side surface of the container 23 along the surface of the airbag 21 on the side of the wind shield 16. By the pin 26a being inserted into the pin insertion portion 25b, the vent hole cover 25 is connected at the lower end side thereof to the side surface of the container 23, and is constrained in a state of being incapable of separating from the outer surface of the airbag 21 on the side of the wind shield 16, that is, in a state of covering the vent hole.

As shown in Fig. 4, the constraining device 26 includes a hollow cylinder 26b extending coaxially with the pin 26a, and a rear end side (right end side in Fig. 4(b), hereinafter) of the pin 26a is inserted into a front end side (left end side in Fig. 4(b), hereinafter) of the cylinder 26b so as to be capable of advancing and retracting movement. The front end side of the cylinder 26b continues with a gas inflow path 26c connected to a small inflator 26d at a terminal thereof.

The small inflator 26d is connected to a control device, not shown and described later, via a connector 26e, and injects gas by an activation signal from the control device, and the injection gas is supplied into the cylinder 26b through the inflow path 26c. A flange 26f which radially extends from a side peripheral surface and slidably comes into abutment with an inner peripheral surface of the cylinder 26b is provided at the rear end side of the pin 26a.

In this constraining device 26, when the activation signal from the control device is inputted, the small inflator 26d injects gas, and allows the gas to flow into the cylinder 26b from the front end side thereof through the inflow path 26c. The gas flowed into the cylinder 26b hits against a front surface (left end surface in Fig. 4(b)) of the flange 26f, whereby the injection pressure moves the pin 26a toward a rear end side of the cylinder 26b.

Consequently, the pin 26a is retracted into the cylinder 26b, and comes out from the pin insertion portion 25b of the vent hole cover 25, whereby the connection between the lower end portion of the vent hole cover 25 and the container 23 is released. Consequently, the vent hole cover 25 is opened like a flap by a gas pressure from the vent hole 22, and the vent hole 22 is opened.

A series of operation from inputting the activation signal from the control device to the small inflator 26d, and causing the pin 26a to be retracted into the cylinder 26b until it comes out from the pin insertion portion 25b is referred to as constraint release operation of the constraining device 26, hereinafter.

The module cover 27 includes a main plate portion 27a that covers the opening on the top surface of the container 23, and a leg strip portion 27b of a frame shape extending vertically downward from a back surface of the main plate portion 27a. The leg strip portion 27b is arranged so as to surround an outer periphery of the upper edge side of the container 23, and is fixed to the outer periphery surface of the container 23 by a fixing member such as a rivet, not shown.

In this embodiment, at a portion of the leg strip portion 27b which extends along the side surface of the container 23 where the constraining device 26 is provided, a swelling portion 27c swelling in the direction away from the side surface is formed so as to surround the constraining device 26. A sufficient distance is secured from an inner side surface of the swelling portion 27c to the constraining device 26 and the vent hole cover 25 constrained by the constraining device 26 so as to prevent the both parties from coming into contact or interfering each other.

The main plate portion 27a is adapted to open the opening on the top surface of the container 23 when the airbag 21 is inflated by being torn by a pressure force from the inflated airbag 21. Reference numeral 27d represents a tear line for guiding such tearing.

In this embodiment, when folding the airbag 21, the surface of the airbag 21 on the side of the wind shield 16 and the opposite surface thereof are aligned one on another and flatten the airbag 21. Then, the airbag 21 is rolled from the distal end portion thereof on the side opposite from the container 23 toward the container 23 and stored in the container 23. In this case, the airbag 21 is folded so that the surface on the side of the wind shield 16 comes outside of the roll, and when storing the roll in the container 23, it is arranged so that the vent hole 22 comes to the opening side on the top surface of the container 23.

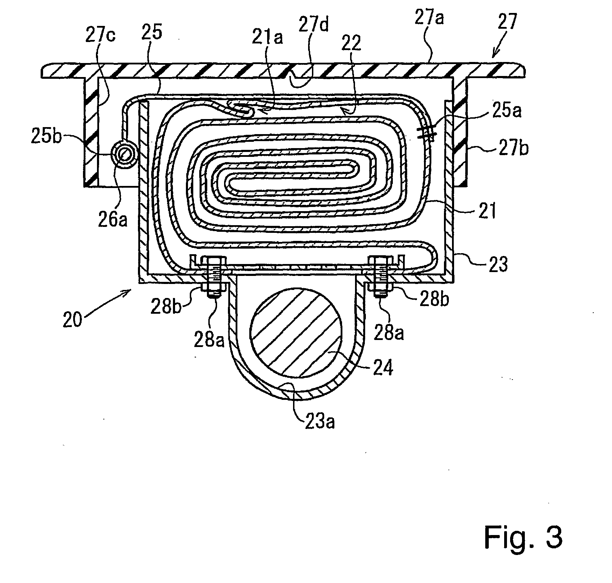

Accordingly, as shown in Fig. 3, the vent hole cover 25 is extended from the outside of the container 23 through the upper side of the upper end portion of the container 23 into the interior of the container 23 smoothly.

Subsequently, by mounting the module cover 27 to the container 23 so as to cover the opening on the top surface of the container 23, the airbag apparatus 20 is completed. The airbag apparatus 20 is installed in an opening (not shown) for installing the airbag apparatus on the top surface of the instrument panel 15. In this case, the module cover 27 is arranged substantially in flush with the upper surface of the instrument panel 15.

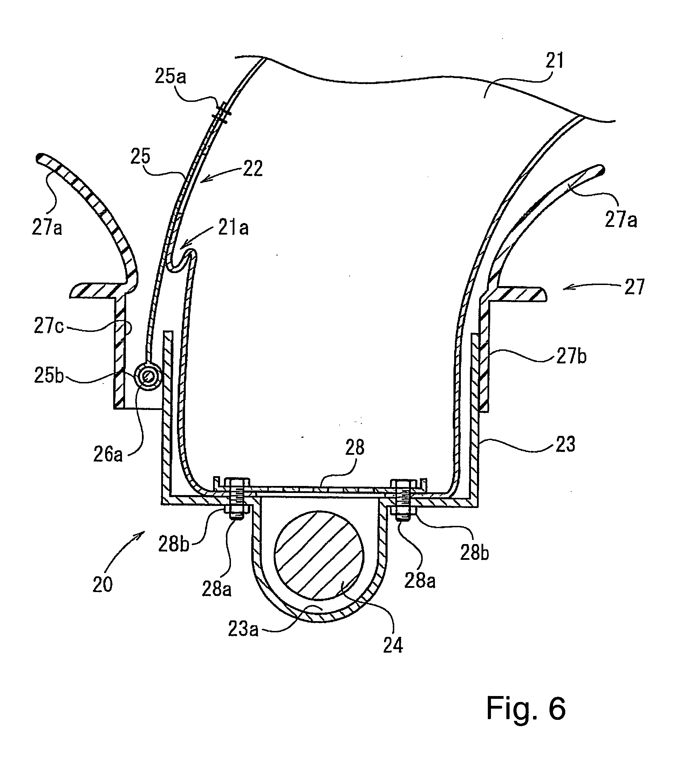

In this embodiment, in order to make the EA capability of the airbag apparatus 20 relatively low, the small inflator 26d of the constraining device 26 is not activated when activating the inflator 24 and inflating the airbag 21. In this arrangement, as shown in Figs. 5 and 6, even when the airbag 21 is inflated, connection between the lower end side of the vent hole cover 25 and the container 23 with the constraining device 26 is continued and hence the vent hole 22 is kept in a state of being covered by the vent hole cover 25. Therefore, gas discharge from the vent hole 22 is constrained, and hence the EA amount by the airbag 21 becomes relatively small.

In this embodiment, when the airbag 21 is inflated, a portion of the surface of the airbag 21 on the side of the wind shield 16 near the vent hole 22 swells toward the outside of the airbag 21 by an amount corresponding to the tucked portion 21a. Therefore, the portion near the vent hole 22 comes into tight contact with the vent hole cover 25, and gas leakage from between the vent hole cover 25 and the outer surface of the airbag is prevented.

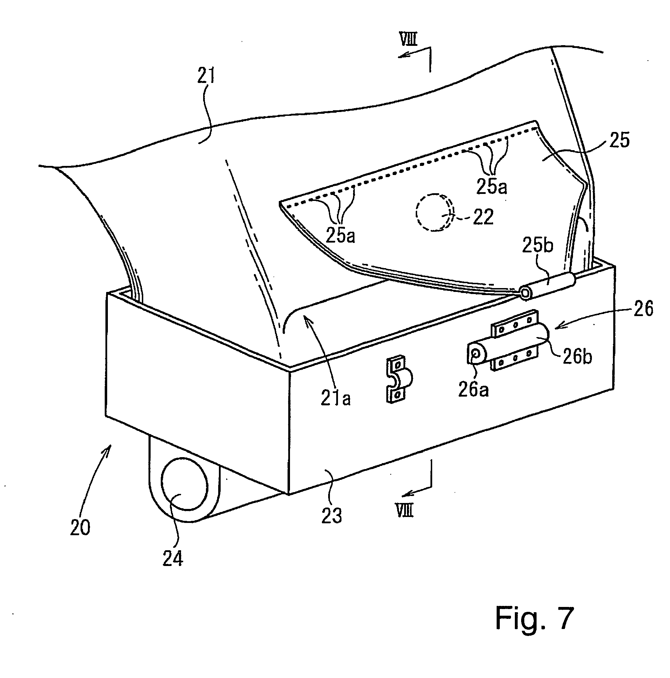

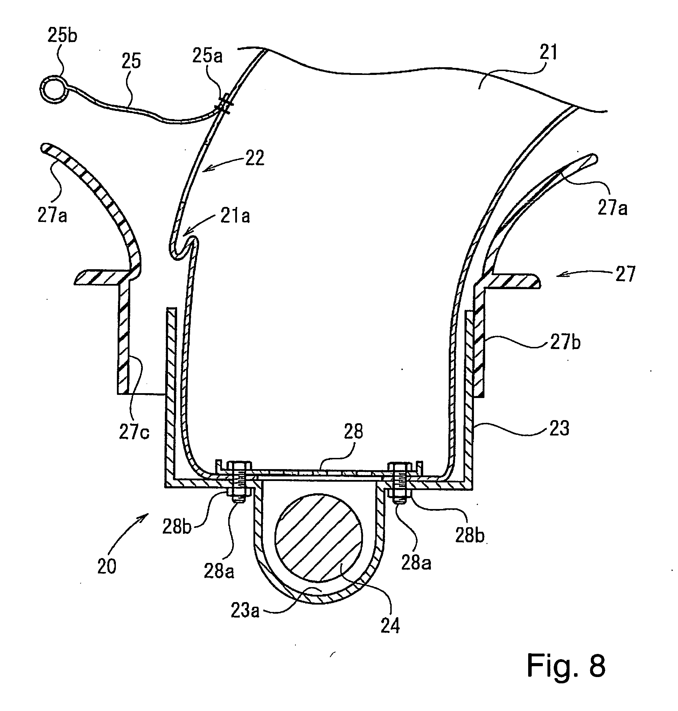

On the other hand, in order to make the EA capability of the airbag apparatus 20 relatively high, when the inflator 24 is activated to inflate the airbag, the small inflator 26d of the constraining apparatus 26 is also activated. In this arrangement, as shown in Figs. 7 and 8, the connection between the lower end portion of the vent hole cover 25 and the container 23 is released, and when the airbag 21 is inflated, the vent hole cover 25 is opened like a flap by the gas pressure from the vent hole 22, whereby the vent hole 22 is opened. Accordingly, gas in the airbag 21 is allowed to be discharged through the vent hole 22, and the relatively large EA amount is secured by the airbag 21.

The timing of activation of the inflator 24 and the small inflator 26d may either be simultaneous or different. For example, even when the small inflator 26d is to be activated, the activation of the small inflator 26d may be delayed until the airbag 21 is inflated to a predetermined amount. In this case, gas is not discharged from the vent hole 22 in an initial stage of inflation of the airbag 21, and hence the speed of inflation of the airbag 21 is increased.

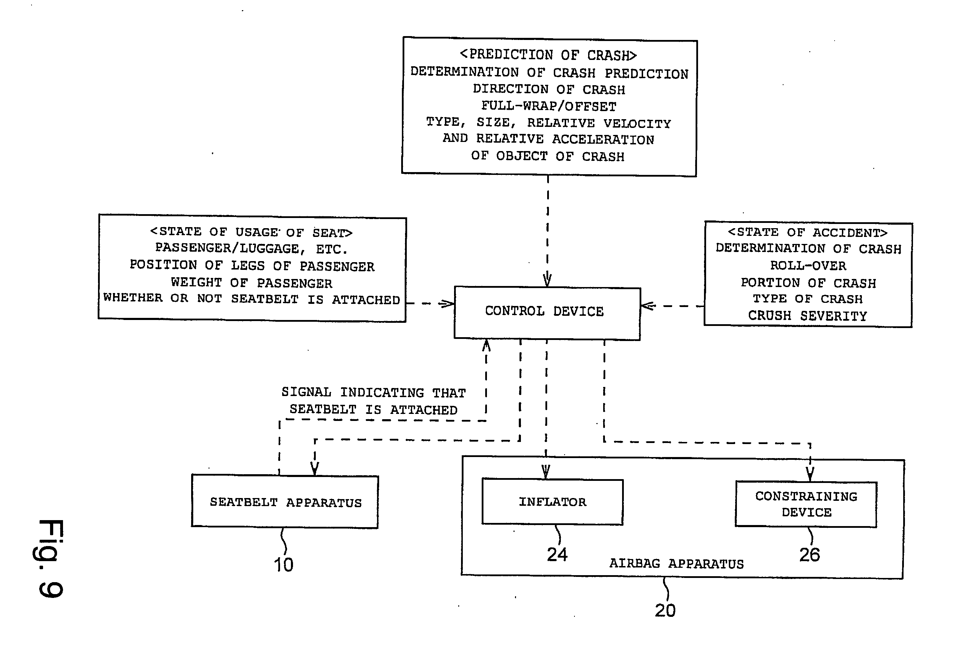

As shown in Fig. 9, detection signals indicating the state of usage of the seat (whether or not the passenger is seated on the seat, presence or absent of the object or the child seat on the seat, the weight of the passenger on the seat, the posture of the passenger, and the position of the seat in the fore-and-aft direction), the crash prediction signals (prediction about whether crash will occur or not, prediction of the direction of crash, prediction about whether the crash is full-lap crash or offset crash, prediction of the type of an object of crash, prediction of the size of the object of crash, prediction of a relative velocity of crash, and prediction of a relative acceleration of crash), and the accident state detection signals (detection about whether the accident is crash or roll-over, detection of the portion of crash, detection of the type of crash, and detection of crash severity) are inputted to the control device, whereby the seatbelt apparatus 10, the airbag apparatus 20 (the inflator 24, the constraining device 26) are controlled.

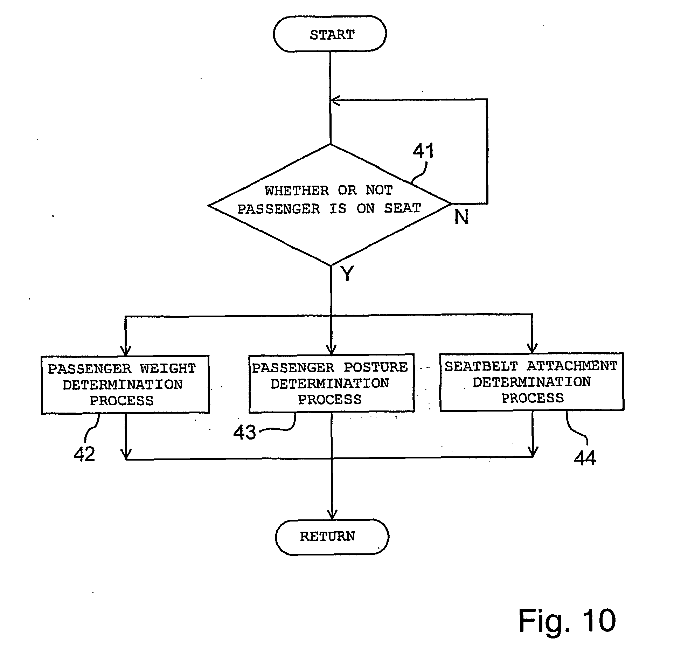

Subsequently, referring to Fig. 10 to Fig. 12, the contents of the series of control will be described. Fig. 10 illustrates a process of detecting the state of usage of the seat. When a program starts, whether or not a passenger is seated on the seat is determined in Step 41. If it is determined that the passenger is seated, the airbag apparatus 20 is set to an operable state. Subsequently, respective determinations in Steps 42 to 44 are performed.

In Step 42, the weight (body weight) of the passenger is determined. When the weight of the passenger is light, the deployment force and the EA capability (amount) of the airbag apparatus 20 are reduced, and when the weight of the passenger is heavy, the deployment force and the EA capability (amount) of the airbag apparatus 20 are increased. Simultaneously the pretensioner force and the EA capability of the seatbelt apparatus 10 are also controlled.

In Step 43, the posture of the passenger is determined. In this embodiment, the detecting device for detecting the posture of the passenger detects the position of the head or the like of the passenger. When the head or the like of the passenger is located behind a predetermined position, the inflator 24 is operated at a high output so as to make the largest shape of the airbag 21. When the head or the like of the passenger is located forward of the predetermined position, the inflator 24 is operated at a low output or is not operated. In this case, it is also possible to adapt the inflator 24 in such a manner that the output of the inflator 24 is reduced with decrease in distance between the instrument panel 15 and the head or the like.

In Step 44, whether or not the seatbelt is attached is determined. Whether or not the seat belt is attached is detected from the seat belt retracting device (hereinafter, referred to as a retractor) or information from the sensor provided in the buckle, and the deployment force and the EA capability (amount) of the airbag apparatus 20 are controlled to be optimal depending on the case where the seatbelt is attached and the case where the seatbelt is not attached. Simultaneously, whether or not the pretensioner of the seatbelt apparatus 10 is activated is also controlled.

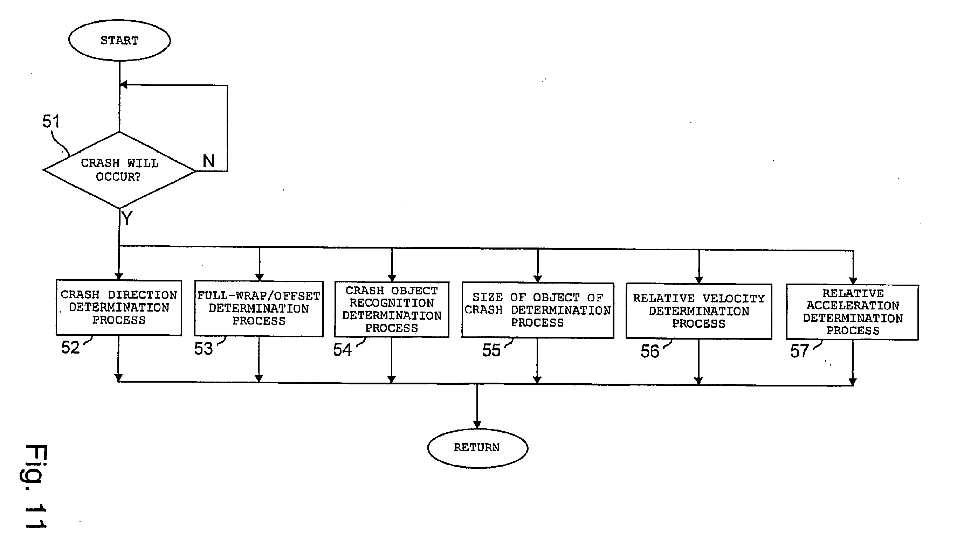

Fig. 11 is a flowchart of a process procedure in the case where a crash is predicted. In Step 51, whether or not crash is predicted is determined first. If it is determined that a crash will occur, processes from Steps 52 to 57 will be performed.

In Step 52, the direction of crash is determined. This prediction is performed for all the front, rear, left and right directions, and the detail position is also predicted. Predictive information is used for activating each apparatus 10, 20 or for varying thresholds of deceleration of activation of each apparatus 10, 20 in the process of determination of the timing of accident.

In Step 53, whether the predicted crash is the full-lap crash or the offset crash is determined, and estimates a behavior of the vehicle upon crash on the basis of the result of determination. The information on crash prediction is used for controlling the operation mode of each apparatus 10, 20 to an optimal state, and varying the thresholds of deceleration of activation of each apparatus 10, 20 in the process of determination of the timing of accident.

In the step 54, the type of the object of crash is determined. In other words, the physical object of crash is recognized, and the crash severity at the time of crash is predicted. The predictive information is used for controlling the operating mode of each apparatus 10, 20 for restraining the passenger to an optimal state or varying the thresholds of deceleration of activation of each restraint apparatus in the process of determination of the timing of accident.

In Step 55, the size or the mass of the physical object of crash is determined, and the crash severity at the time of crash is predicted. The predictive information is used for controlling the operation mode of each apparatus 10, 20 to an optimal state and varying the thresholds of deceleration of activation of each apparatus 10, 20 in the process of determination of the timing of accident.

In Step 56, the relative velocity with respect to the object of crash is determined, and the crash severity at the time of crash is predicted. The predictive information is used for controlling the operation mode of each apparatus 10, 20 to an optimal state and varying the thresholds of deceleration of activation of each apparatus 10, 20 in the process of determination of the timing of accident.

In Step 57, the relative acceleration with respect to the object of crash is determined and the crash severity at the time of crash is predicted. The predictive information is used for controlling the operation mode of each apparatus 10, 20 to an optimal state and varying the thresholds of deceleration of activation of each apparatus 10, 20 in the process of determination of the timing of accident.

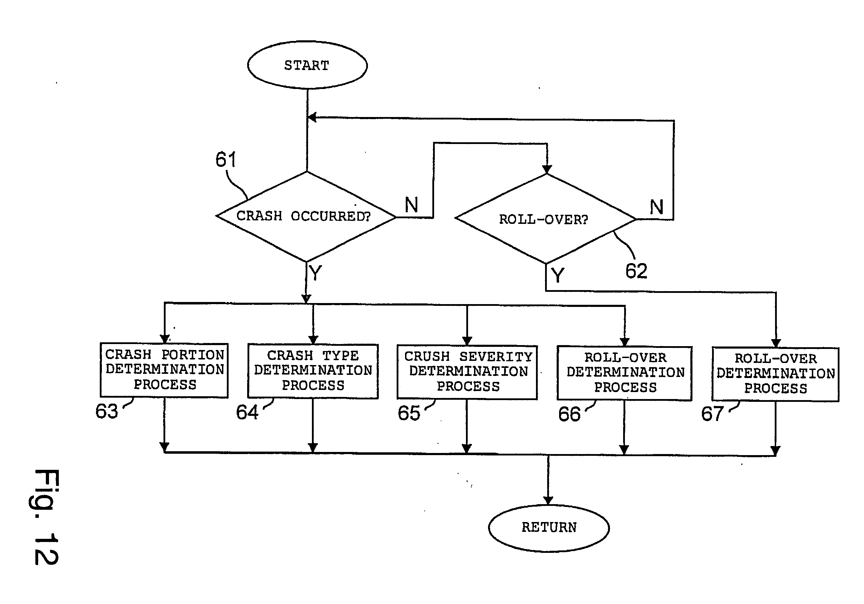

Fig. 12 shows a flowchart of a process procedure when an accident such as crash actually occurred.

In Step 61, crash of the vehicle is detected by the acceleration sensor mounted in the front, rear, left and right portions of the vehicle, which utilizes electrostatic capacity or strain. The thresholds of determination of crash can also be varied depending on the crash detection information.

In Step 61, when it is not determined to be crash, the procedure goes to Step 62, in which it is determined whether roll over has occurred or not. When it is neither the crash nor the roll over, the procedure goes back to Step 61. When it is roll over, the procedure goes from Step 62 to Step 67, in which operation or non-operation of the airbag apparatus 20 and optimal deployment force and EA capability (amount) are controlled. Simultaneously, the pretensioner force and the EA capability of the seat belt apparatus 10 are also controlled.

When it is determined to be crash in Step 61, procedures in Steps 63 to 66 are performed.

Portions of crash are determined in Step 63, and optimal deployment force and EA capability (amount) of the airbag apparatus 20 are controlled. Simultaneously, the pretensioner force and the EA capability of the seat belt apparatus 10 are also controlled.

In Step 64, the type of crash is determined (front, oblique, side crash or the like), and optimal deployment force and EA capability (amount) of the airbag apparatus 20 are controlled. Simultaneously, the pretensioner force and the EA capability of the seat belt apparatus 10 are also controlled.

In Step 65, the magnitude of the crash impact (crash severity) is determined. According to the result of determination, optimal deployment force and EA capability (amount) of the airbag apparatus 20 are controlled. Simultaneously, the pretensioner force and the EA capability of the seatbelt apparatus 10 are controlled.

Since there is a possibility of rolling over as a result of crash even when the result of determination in Step 62 does not correspond to the roll over, whether the roll over has occurred or not is determined again in Step 66, and operation or non-operation of the airbag apparatus 20 and optimal deployment force and EA capability (amount) are controlled. Simultaneously, the pretensioner force and the EA capability of the seatbelt apparatus 10 are controlled.

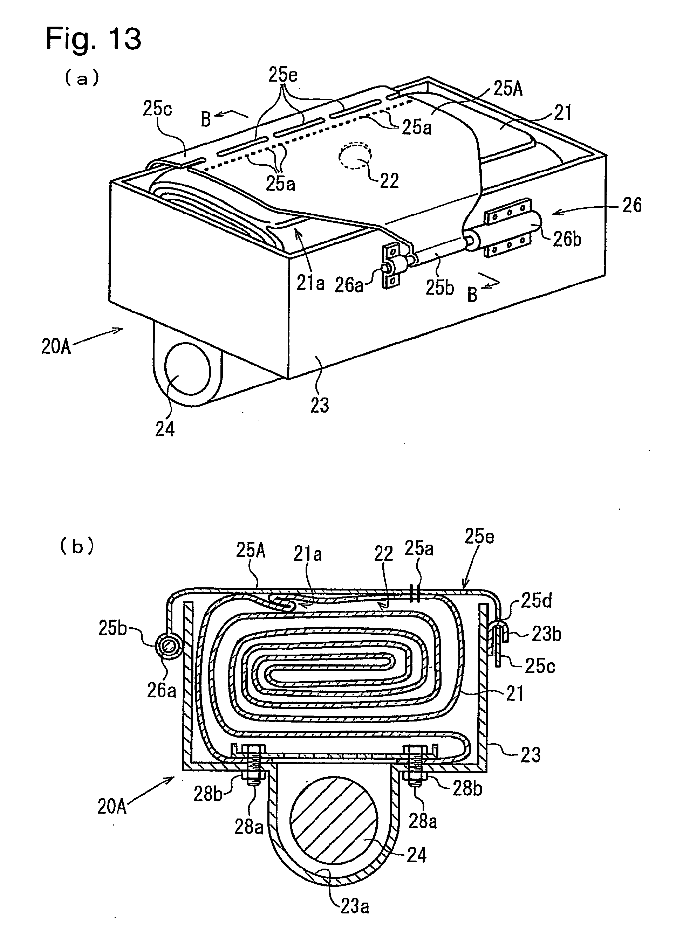

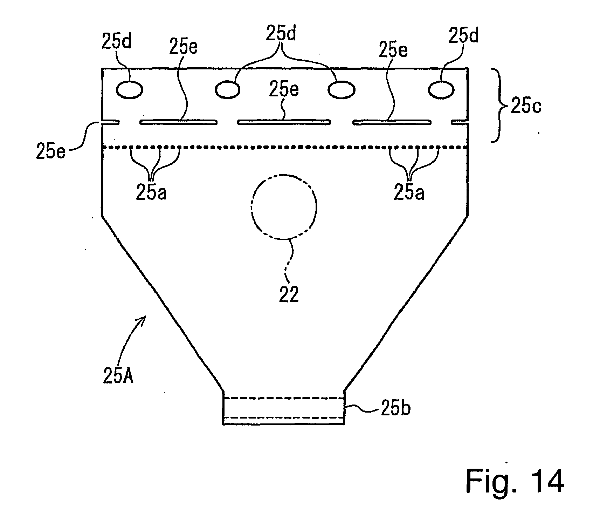

Fig. 13(a) is a perspective view of an airbag apparatus of a passenger restraint system according to another embodiment. Fig. 13(b) is a cross-sectional view taken along a line B-B in Fig. 13(a), and Fig. 14 is a plan view of a vent hole cover of the airbag apparatus.

In an airbag apparatus 20A of this embodiment, an upper side of a vent hole cover 25A is extended upwardly of the connected portion (seam 25a) with respect to the outer surface of the airbag 21 above the vent hole 22, and after the airbag 21 is folded and stored in the container 23, the vent hole cover 25A is extended from the side surface of the container 23 where the constraining device 26 is provided across the opening on the top surface of the container 23 to the side surface opposing thereto and an extended portion 25c on the upper side is engaged with the opposed side surface.

In this embodiment, a hook portion 23b is provided on the outer surface on the opposing side surface of the container 23, and the hook portion 23b is hooked with a hooking hole 25d formed on the extended portion 25c to engage the extended portion 25c.

In this embodiment, a portion between the seam 25a and the hooking hole 25d is formed with an extended perforated line 25e along the seam 25a. When the airbag 21 is inflated, the vent hole cover 25 is torn along this perforated line 25e and divided into the extended portion 25c and the side which is connected to the remaining airbag 21, thereby releasing the opening on the top surface of the container 23.

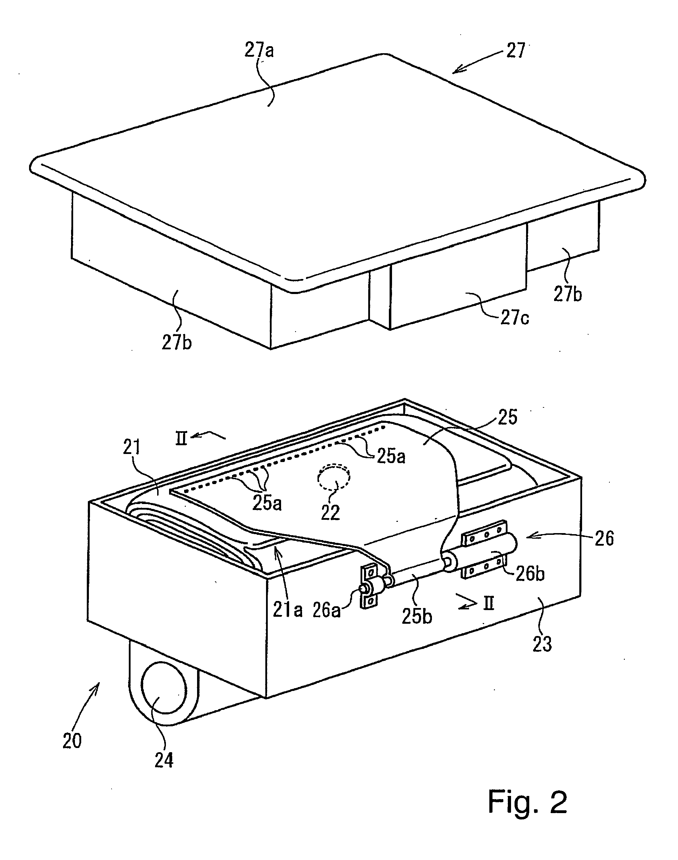

Other structures of the airbag apparatus 20A are the same as the airbag apparatus 20 shown in Figs. 1 to 8 described above, and the same reference numerals in Figs. 13, 14 as those in Figs. 1 to 8 represent the same parts.

In the airbag apparatus 20A, the vent hole cover 25A is arranged so as to extend across the opening on the top surface of the container 23, and both ends thereof are engaged (connected) with a pair of opposed side surfaces of the container 23 respectively. Therefore, the folded body of the airbag 21 is retained in the container 23 by the vent hole cover 25A. Therefore, preferable assembleability of the airbag apparatus 20A is achieved. Also, since it is not necessary to provide a member for retaining the folded body of the airbag 21 in the container 23 separately, simplification of the structure and the assembling process of the airbag apparatus 20A and reduction of the cost are achieved.

In particular, when the module cover for covering the opening on the top surface of the container 23 is integrated with the instrument panel, the folded body of the airbag 21 is prevented from falling off from inside the container 23 in installing the airbag apparatus 20A into the instrument panel, and hence the installation can be performed easily.

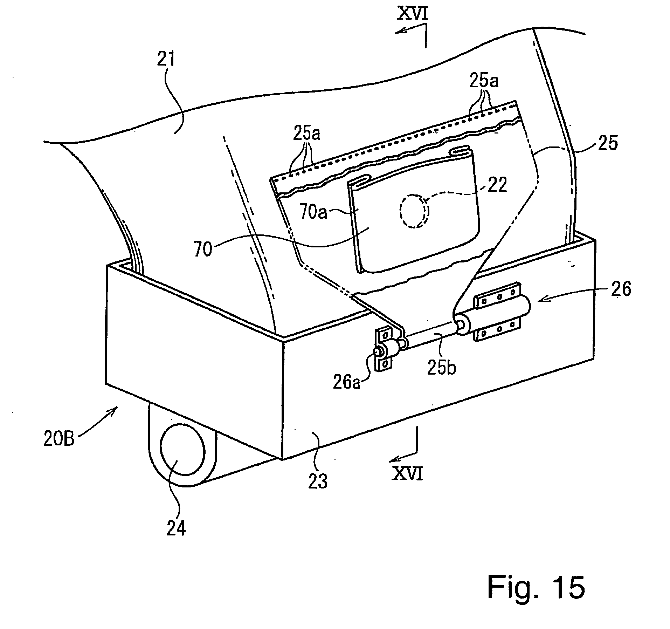

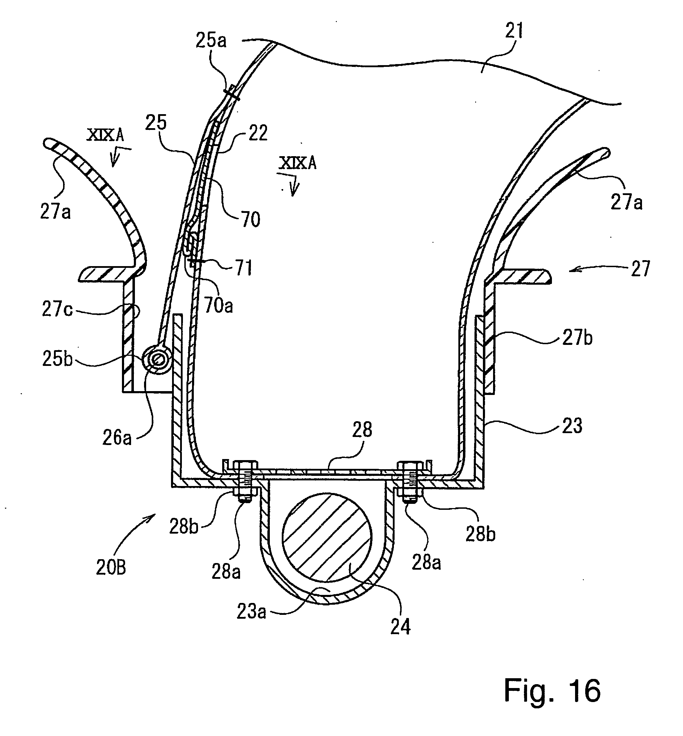

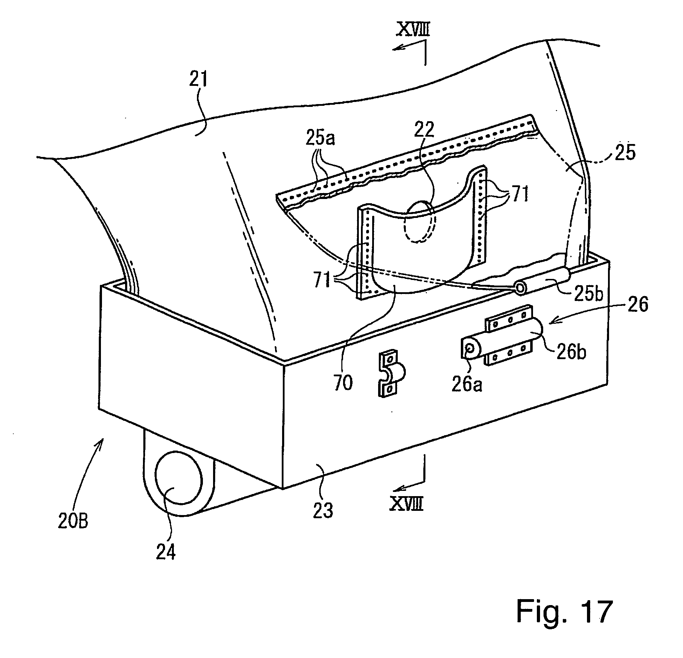

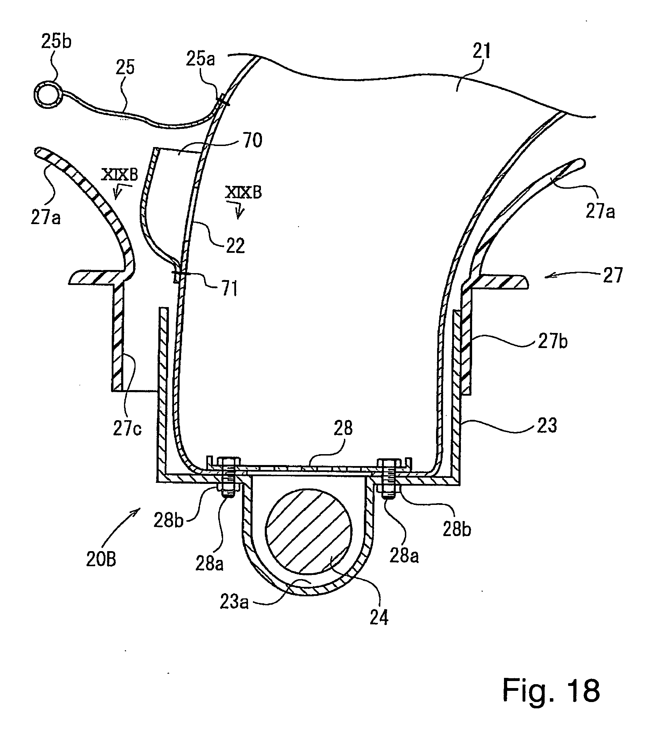

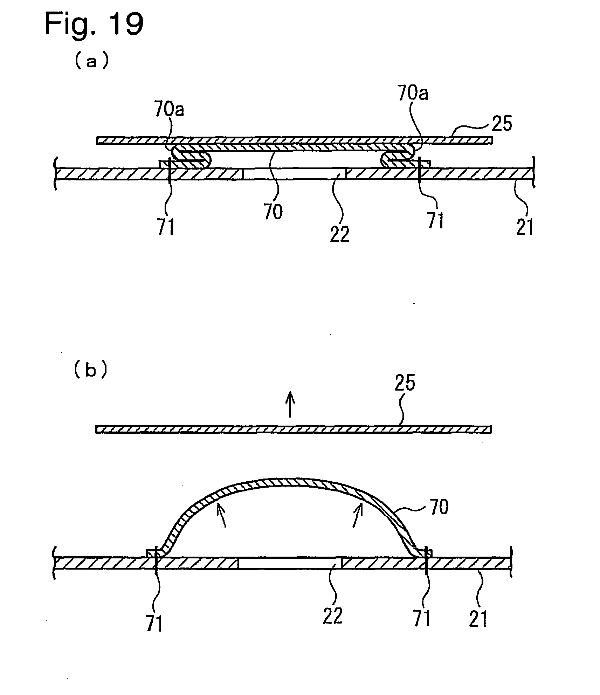

Fig. 15 is a perspective view illustrating a state in which the airbag of an airbag apparatus according to another embodiment is inflated when the vent hole is closed. Fig. 16 is a cross-sectional view taken along a line XVI-XVI in Fig. 15. Fig. 17 is a perspective view illustrating a state in which the airbag is inflated when the vent hole is opened. Fig. 18 is a cross-sectional view taken along a line XVIII-XVIII in Fig. 17. Figs. 19(a) and 19(b) are cross-sectional views respectively taken along a line XIXA-XIXA in Fig. 16 and a line XIXB-XIXB in Fig. 18.

An airbag apparatus 20B according to this embodiment is provided with an auxiliary cover 70 in addition to the structure according to the embodiment shown in Figs. 1 to 12. Specifically, the auxiliary cover 70 is disposed between the vent hole cover 25 and the airbag 21, and blocks the vent hole 22 together with the vent hole cover 25.

In this embodiment, the auxiliary cover 70 is formed of a substantially rectangular sheet and is disposed on the outer surface of the airbag 21 to cover the vent hole 22. A pair of opposing sides of the auxiliary cover 70 and one side of the auxiliary cover 70 that is perpendicular to the pair are stitched on a peripheral portion of the vent hole 22 to form a seam 71. The vent hole 22 is positioned closer to the central portion of the auxiliary cover 70 than the seam 71. In this embodiment, when stitching the auxiliary cover 70 to form the seam 71, the auxiliary cover 70 is given certain looseness so as to form tucked portions 70a along the three sides of the auxiliary cover 70.

The one remaining side of the auxiliary cover 70 is not stitched on the outer surface of the airbag 21, and is therefore free. This free side is disposed proximate the upper end portion of the vent hole cover 25. The free side and the outer surface of the airbag 21 form an opening therebetween, which is open towards the upper end portion of the vent hole cover 25 as shown in Fig. 18 (that is, towards the side of the vent hole cover 25 that is stitched on the outer surface of the airbag 21).

The vent hole cover 25 overlaps the outer surface of the airbag 21 while covering the auxiliary cover 70. The lower end portion of the vent hole cover 25 is supported by the pin 26a of the constraining device 26.

Although the tucked portion 21a of the airbag 21 is omitted in this embodiment, the airbag 21 may be provided with the tucked portion 21a as in the above embodiments.

Other configurations of the airbag apparatus 20B are similar to those of the airbag apparatus 20 shown in Figs. 1 to 12, and therefore, the components shown in Figs. 15 to 19 that are equivalent to those shown in Figs. 1 to 12 are given the same reference numerals. Moreover, the method for controlling the airbag apparatus 20B is the same as the method for controlling the airbag apparatus 20.

According to the airbag apparatus 20B, if the airbag 21 is inflated while maintaining the connection between the vent hole cover 25 and the container 23 via the constraining device 26 so that the vent hole 22 remains covered with the vent hole cover 25, the vent hole cover 25 is stretched along the outer surface of the airbag 21 as shown in Fig. 16 and Fig. 19(a). Consequently, the auxiliary cover 70 overlaps the vent hole 22 by being pressed against the outer surface of the airbag 21 by the vent hole cover 25, thus enhancing the blocked state of the vent hole 22.

As described above, since the opening of the auxiliary cover 70 is disposed proximate the side of the vent hole cover 25 that is stitched on the outer surface of the airbag 21 in this embodiment, the clipping of the opening of the auxiliary cover 70 between the vent hole cover 25 and the airbag 21 is enhanced, thereby advantageously reducing or preventing gas leakages through the opening of the auxiliary cover 70.

On the other hand, in a case where the airbag 21 is inflated by releasing the constraining device 26 to disconnect the vent hole cover 25 and the container 23, the vent hole cover 25 becomes free. This means that the vent hole cover 25 does not press the auxiliary cover 70 against the outer surface of the airbag 21. For this reason, the auxiliary cover 70 is pushed by the gas pressure in the airbag 21 so as to recede from the outer surface of the airbag 21. Consequently, the vent hole 22 is opened, whereby gas is released outward through the vent hole.

In this case, the auxiliary cover 70 swells outward since the tucked portions 70a are deployed, as shown in Fig. 18 and Fig. 19(b). Accordingly, the gas released through the vent hole 22 passes smoothly through the space between the auxiliary cover 70 and the outer surface of the airbag 21.

The auxiliary cover 70 according to this embodiment is one example, and therefore, the configuration of the auxiliary cover is not limited thereto. For example, although not shown, the auxiliary cover may be deployable in a flap-like manner when pushed by the gas pressure in the airbag.

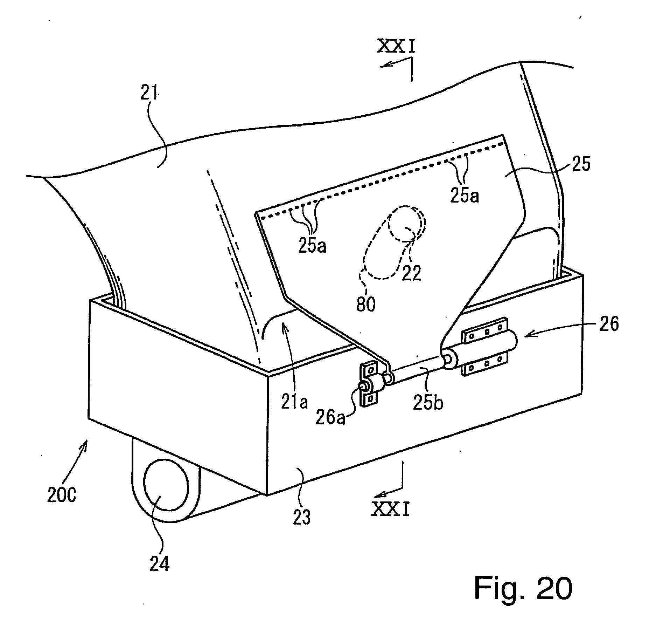

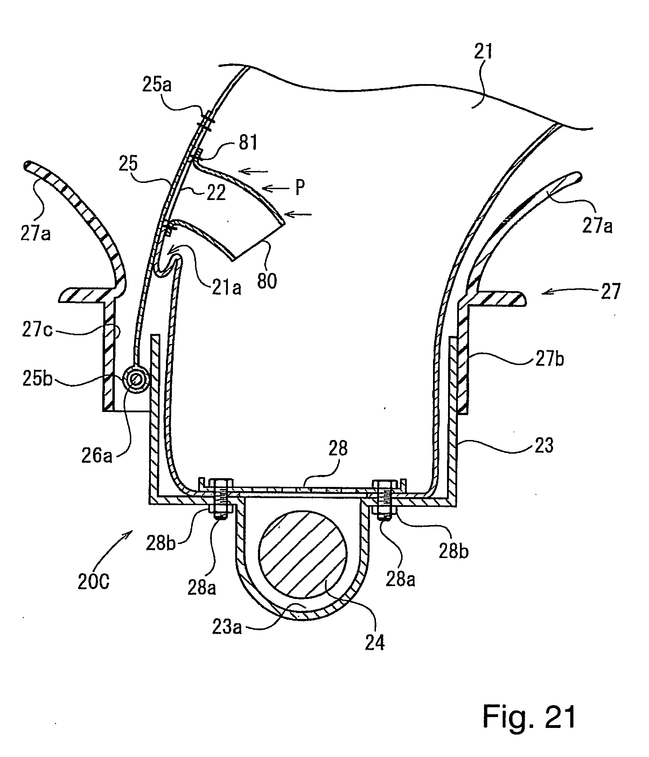

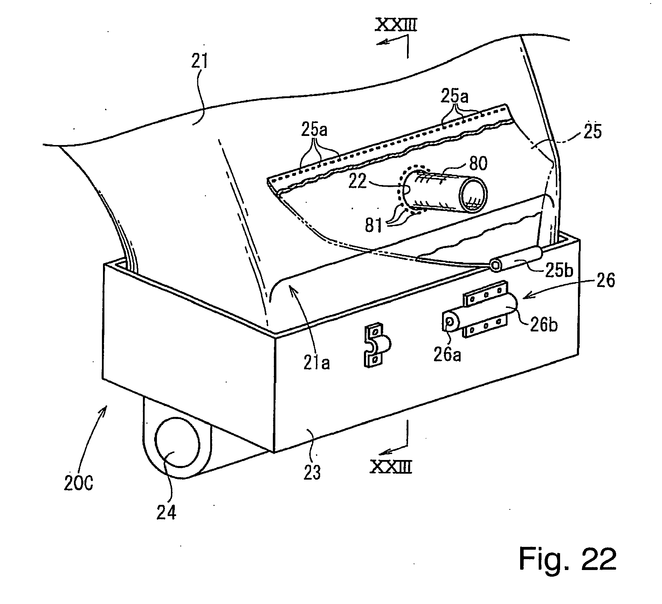

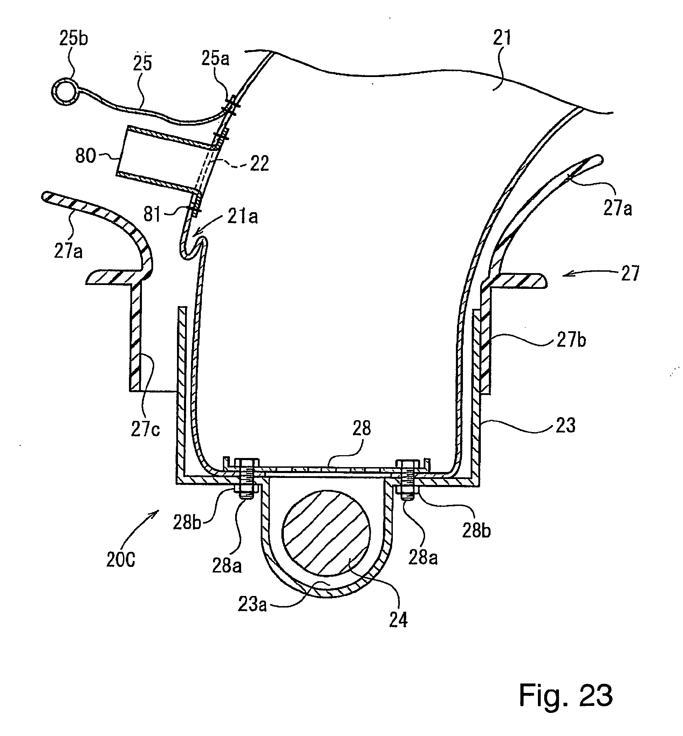

Fig. 20 is a perspective view illustrating a state where the airbag of an airbag apparatus according to another embodiment is inflated when the vent hole is closed. Fig. 21 is a cross-sectional view taken along a line XXI-XXI in Fig. 20. Fig. 22 is a perspective view illustrating a state in which the airbag is inflated when the vent hole is opened. Fig. 23 is a cross-sectional view taken along a line XXIII-XXIII in Fig. 22.

An airbag apparatus 20C according to this embodiment is provided with a cylindrical nozzle 80 in addition to the structure according to the embodiment shown in Figs. 1 to 12. Specifically, the cylindrical nozzle 80 has two opposite ends that are open, one of which is connected to the vent hole 22.

In this embodiment, the nozzle 80 is formed by rolling a sheet of base cloth into a cylindrical shape and stitching together the rolled ends of the cloth. However, the nozzle does not necessarily have to be formed in this manner. Alternatively, the nozzle may be formed of a tube that is composed of, for example, rubber or synthetic resin having flexibility.

The periphery of one end of the nozzle 80 is stitched on a peripheral portion of the vent hole 22 to form a seam 81. Although the nozzle 80 is stitched on the peripheral portion of the vent hole 22 from the inside of the airbag 21 in this embodiment, the nozzle 80 may be stitched on the peripheral portion of the vent hole 22 from the outside of the airbag 21 and be pushed into the airbag 21 through the vent hole 22.

According to the airbag apparatus 20C, the nozzle 80 is preliminarily disposed inside the airbag 21 as shown in Figs. 20 and 21 before the airbag 21 is folded and housed in the container 23.

Other configurations of the airbag apparatus 20C are similar to those of the airbag apparatus 20 shown in Figs. 1 to 12. Moreover, the method for controlling the airbag apparatus 20C is the same as the method for controlling the airbag apparatus 20.

According to the airbag apparatus 20C, if the airbag 21 is inflated while maintaining the connection between the vent hole cover 25 and the container 23 via the constraining device 26 so that the vent hole 22 remains covered with the vent hole cover 25, the vent hole cover 25 blocks the vent hole 22 from the outside of the airbag 21 as shown in Figs. 20 and 21. Thus, the nozzle 80 is retained inside the airbag 21 without protruding outward from the airbag 21 through the vent hole 22. Although Figs. 20 and 21 show the nozzle 80 in its cylindrical state to provide a clear understanding of each of the components, the nozzle 80 is actually in its closed state due to being pressed against the inner surface of the airbag 21 by the gas pressure in the airbag 21, as indicated by arrows P in Fig. 21. Consequently, the vent hole 22 is also blocked by the nozzle 80, thus enhancing the blocked state of the vent hole 22.

On the other hand, in a case in which the airbag 21 is inflated by releasing the constraining device 26 to disconnect the vent hole cover 25 and the container 23, the vent hole cover 25 becomes free. In this case, since the vent hole cover 25 does not block the vent hole 22 from the outside of the airbag 21, the gas pressure in the airbag 21 pushes the nozzle 80 outward from the airbag 21 through the vent hole 22 as shown in Figs. 22 and 23. Thus, the gas flows into the nozzle 80 and increases the diameter thereof, whereby the nozzle 80 attains its cylindrical shape and becomes opened. As a result, the gas is released from the airbag through the nozzle 80.

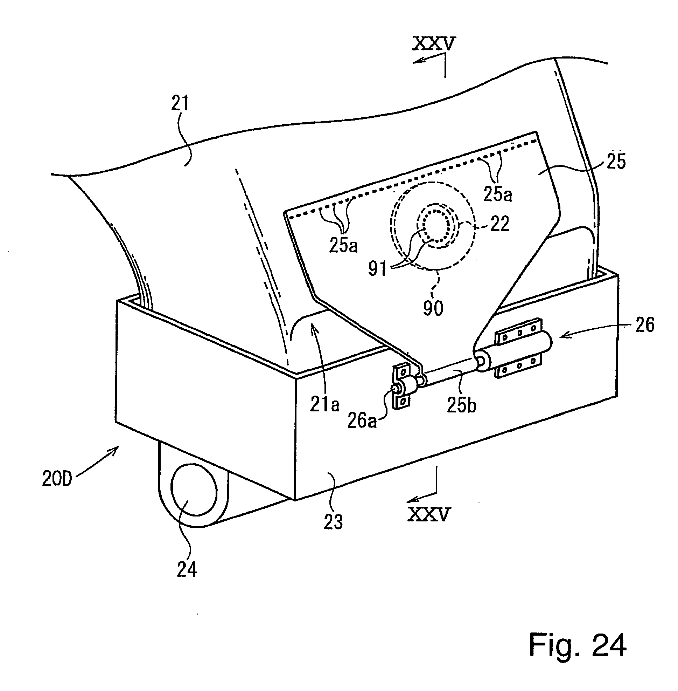

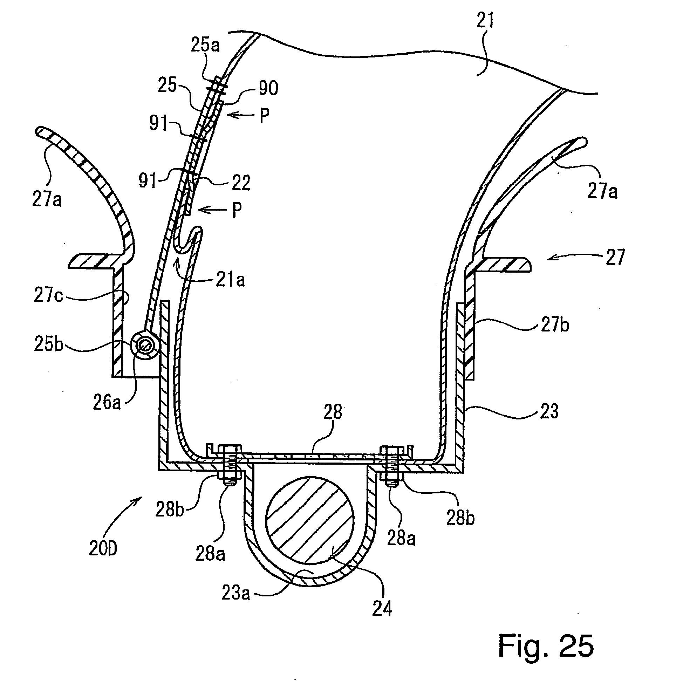

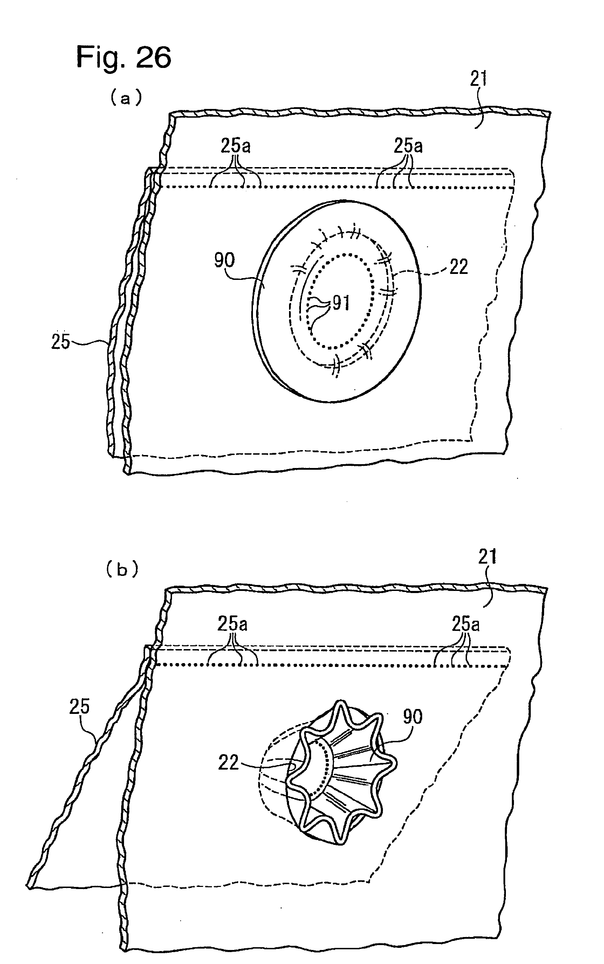

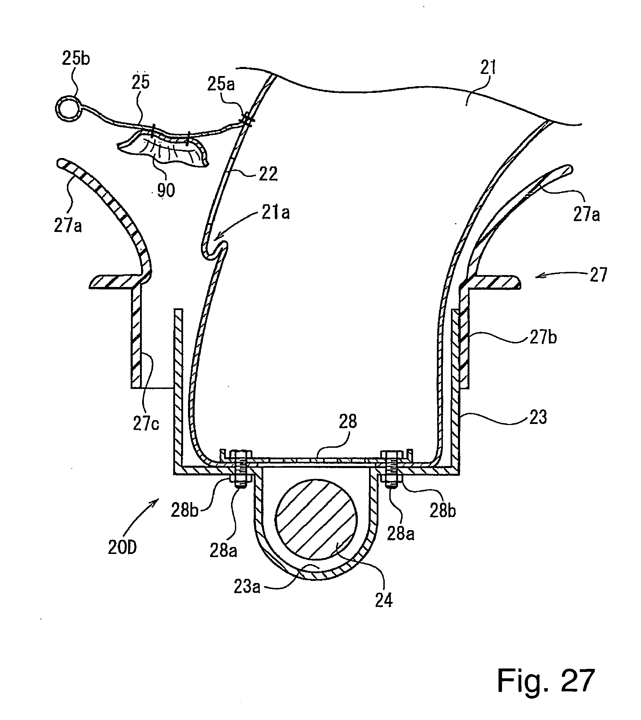

Fig. 24 is a perspective view illustrating a state where the airbag of an airbag apparatus according to another embodiment is inflated when the vent hole is closed. Fig. 25 is a cross-sectional view taken along a line XXV-XXV in Fig. 24. Fig. 26(a) is a perspective view of the vent hole and the vicinity thereof when the vent hole is in its closed state, as viewed from the inside of the airbag. Fig. 26(b) is the same perspective view as Fig. 26(a) but shows a process in which an inner cover is being opened. Fig. 27 is the same cross-sectional view as Fig. 25 but shows the vent hole in its opened state.

An airbag apparatus 20D according to this embodiment is provided with an inner cover 90 in addition to the structure according to the embodiment shown in Figs. 1 to 12. Specifically, the inner cover 90 covers the vent hole 22 from the inside of the airbag 21.

In this embodiment, the inner cover 90 is formed of a circular sheet having a larger diameter than the vent hole 22. The inner cover 90 overlaps the vent hole 22 in a substantially concentric manner from the inside of the airbag 21. Moreover, the inner cover 90 is stitched onto the vent hole cover 25, which overlaps the vent hole 22 from the outside of the airbag 21, thereby forming a seam 91. The vent hole 22 thus intervenes the inner cover 90 and the vent hole cover 25. The inner cover 90 and the airbag 21 are not joined to each other.

Other configurations of the airbag apparatus 20D are similar, to those of the airbag apparatus 20 shown in Figs. 1 to 12. Moreover, the method for controlling the airbag apparatus 20D is the same as the method for controlling the airbag apparatus 20.

According to the airbag apparatus 20D, if the airbag 21 is inflated while maintaining the connection between the vent hole cover 25 and the container 23 via the constraining device 26 so that the vent hole 22 remains covered with the vent hole cover 25, the vent hole 22 is also covered from the inside of the airbag 21 by the inner cover 90, as shown in Figs. 24, 25, and 26(a). Since the vent hole cover 25 stretched along the outer surface of the airbag 21 supports the inner cover 90 from the outside of the airbag 21 via the vent hole 22, the inner cover 90 is tightly attached to the peripheral portion of the vent hole 22 without being pushed outward from the airbag 21 through the vent hole 22 by the gas pressure in the airbag 21. Accordingly, this enhances the blocked state of the vent hole 22.

On the other hand, in a case where the airbag 21 is inflated by releasing the constraining device 26 to disconnect the vent hole cover 25 and the container 23, the vent hole cover 25 becomes free. In this case, since the vent hole cover 25 does not support the inner cover 90 from the outside of the airbag 21, the gas pressure in the airbag 21 pushes the inner cover 90 outward from the airbag 21 through the vent hole 22 as shown in Figs. 26(b) and 27. Consequently, the vent hole 22 is opened, and the gas is released from the airbag 21 through the vent hole 22.

Although the inner cover 90 is formed of a circular sheet in this embodiment, the inner cover according to the present invention is not limited to this shape. Furthermore, although the inner cover 90 is formed of a sheet of base cloth, the inner cover 90 may be formed of other alternative materials, such as a silicon sheet.

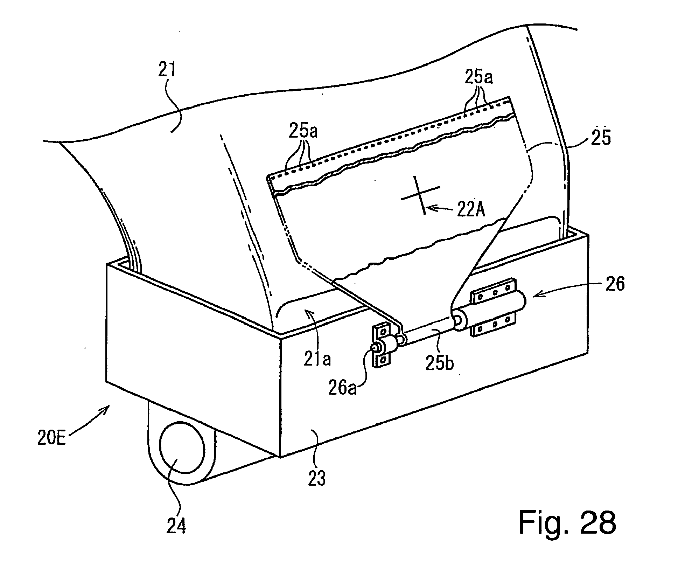

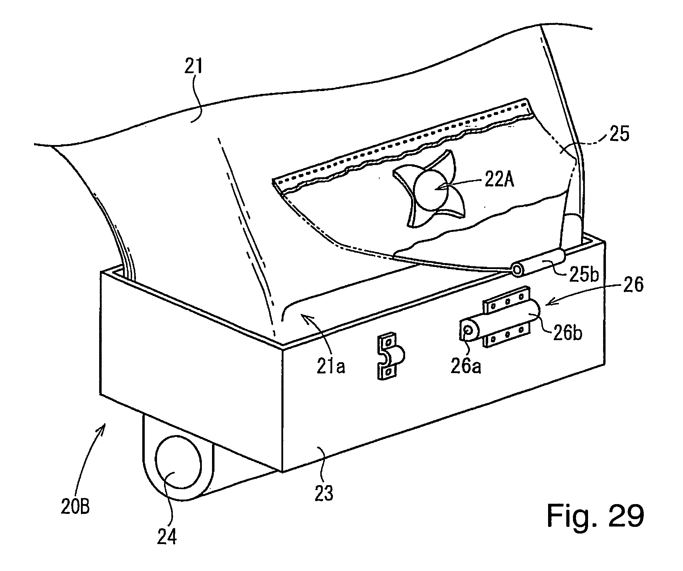

Although the vent hole in each of the above-described embodiments is circular, the vent hole may alternatively have a slit-like shape. Fig. 28 is a perspective view illustrating a state where the airbag of an airbag apparatus according to another embodiment is inflated when a slit-like vent hole is closed. Fig. 29 is a perspective view illustrating a state where the airbag is inflated when the vent hole is opened.

An airbag apparatus 20E according to this embodiment is provided with a slit-like vent hole 22A in place of the circular vent hole 22 in the airbag 21 according to the embodiment shown in Figs. 1 to 12. As shown in the drawings, the slit-like vent hole 22A according to this embodiment has a pair of slits extending perpendicular to each other to substantially form a cross shape. Alternatively, the vent hole may have other types of slit-like shapes, such as a single-line shape, a radial shape having multiple slits extending in various directions from the center, a C shape, and an L shape.

The vent hole cover 25 covers the slit-like vent hole 22A from the outside of the airbag 21.

Other configurations of the airbag apparatus 20E are similar to those of the airbag apparatus 20 shown in Figs. 1 to 12. Moreover, the method for controlling the airbag apparatus 20E is the same as the method for controlling the airbag apparatus 20.

Accordingly, by giving the vent hole 22A a slit-like shape, gas leakages through the vent hole 22A are significantly reduced or prevented when the airbag 21 is inflated in a state where the vent hole 22A is blocked by the vent hole cover 25.

In other words, unless the vent hole cover 25 becomes detached from the airbag 21 to cause the peripheral portion of the vent hole 22A to evaginate between the vent hole cover 25 and the airbag 21, the slit-like vent hole 22A has an extremely small opening area or substantially no openings, as shown in Fig. 28. Accordingly, this significantly reduces gas leakages through the vent hole 22A.

When the vent hole cover 25 is released from the vent hole 22A and begins to open, the peripheral portion of the vent hole 22A evaginates between the vent hole cover 25 and the airbag 21 as shown in Fig. 29. Thus, the opening area of the vent hole 22A in its opened state becomes substantially equal to that of the circular vent hole 22, whereby the gas flows outward smoothly through the vent hole 22A.

The above-described embodiment is simply an example of the present invention, and the present invention is not limited thereto. For example, a restraint apparatus other than those shown above, such as a device for moving the head rest forward upon crash may be employed. In addition, conditions other than those shown above may be predicted or detected.

In the present invention, two or more of the vent holes may be formed on the airbag. In this case, vent hole covers may be provided on all the vent holes, and there may exist vent holes which are not provided with a vent hole cover.

The vent hole cover may be such as to cover the vent hole partly when it is constrained by the constraining device and, when constraint is released, allow the vent hole to open largely. For example, although not shown, an auxiliary vent hole smaller than the above-described vent hole may be provided at a portion of the vent hole cover overlapped with the vent hole, so as to allow the outside and the inside of the airbag to be communicated constantly via the auxiliary vent hole even when the vent hole cover is constrained by the constraining device.

Connection between the vent hole cover and the airbag may be achieved by various methods such as weaving or bonding in addition to stitching with the sewing thread.

In the above-described respective embodiments, the vent hole cover is disposed along the outer surface of the airbag. However, it may be disposed along the inner surface of the airbag. In this case, the constraining device may be provided inside the container, or a through hole may be provided on the side surface of the container so that the vent hole cover can be pulled out from the through hole to the outside of the container for constraint.

In the above embodiment, the constraining device is activated for releasing the constraint by gas pressure from the small inflator. However, it may be activated by other means such as magnetic force or the like.

In the above-described embodiment, the vent hole cover is constrained with respect to the container. However, it may be constrained with respect to any other fixed members such as an airbag fixing member or an inflator fixing member or the vehicle body. In the case where the airbag apparatus is installed in a steering wheel, the vent hole cover may be constrained with respect to a horn plate or the like.

In the above-described embodiment, the swelling portion that swells in the direction away from the side surface of the container is provided on the leg strip portion of the module cover, and the constraining device and the vent hole cover are arranged in the swelling portion. However, it is also possible to provide a recessed portion which is depressed inwardly of the container is provided on the side surface of the container, and to arrange the constraining device and the vent hole cover in the recessed portion.

## Claims

1. A passenger restraint system comprising: a seat belt apparatus (10); and an airbag apparatus (20; 20A; 20B; 20C; 20D; 20E) for restraining a passenger seated on a seat (1) of a vehicle,
**characterized in that** a control device for controlling the seatbelt apparatus (10) and the airbag apparatus (20; 20A; 20B; 20C; 20D; 20E) on the basis of a detection or a prediction signal from at least one of detection means (6) for detecting a state of usage of the seat, detection means for detecting a state of usage of the seatbelt apparatus, crash prediction means, and accident state detection means is provided.

2. The passenger restraint system according Claim 1, **characterized in that** the control device controls at least one of a pretensioner force and an energy absorbing capability of the seat belt apparatus (10), a deployment force, the size, and an energy absorbing capability of an airbag on the basis of the detection or prediction signal.

3. A passenger restraint system comprising:
a seatbelt apparatus (10) and an airbag apparatus (20; 20A; 20B; 20C; 20D; 20E) for restraining a passenger seated on a seat (1) of a vehicle, and
a control device for controlling the seatbelt apparatus (10) and the airbag apparatus (20; 20A; 20B; 20C; 20D; 20E) respectively,
**characterized in that** the airbag apparatus comprises an airbag (21) that is inflated in the vicinity of the passenger, a mounting member (23) having the airbag mounted thereon, a gas generator (24) for inflating the airbag, a vent hole (22; 22A) for discharging gas from the airbag, a vent hole cover (25; 25A) for closing or reducing an opening area of the vent hole (22; 22A), and a constraining device (26) for releasably constraining the vent hole cover (25; 25A) in a state of closing the vent hole (22; 22A) or in a state of reducing the opening area, and
**in that** the control device controls the constraining device (26) so as to continue or release constraint of the vent hole cover (25; 25A) by the constraining device (26) on the basis of a detection or a prediction signal from at least one of detection means (6) for detecting a state of usage of the seat, detection means for detecting a state of usage of the seatbelt apparatus, crash prediction means, and accident state detection means.

4. The passenger restraint system according to Claim 3, **characterized in that** a tucked portion (21a) is formed on the airbag (21) near the vent hole (22) at a portion where the vent hole cover (25; 25A) is overlapped so as to be sagged on the side of the vent hole cover.

5. The passenger restraint system according to Claim 3 or Claim 4,
**characterized in that** the airbag (21) is mounted to the mounting member (23) in a folded state,
the vent hole (22) is arranged on an outside of a folded body of the airbag on an opposite side from the mounting member (23), the vent hole cover (25A) covers the vent hole so as to surround the outer surface on the opposite side, one end of the vent hole cover is connected to the mounting member (23) via the constraining device (26) and the other end thereof is releasably connected to the mounting member (23) via connecting means (23b, 25c, 25e),
the vent hole cover (25A) is connected to the portion near the vent hole between the portion overlapped with the vent hole and the other end, and
the connecting means (23b, 25c, 25e) releases connection between the other end of the vent hole cover (25A) and the mounting member when the airbag is inflated.

6. The passenger restraint system according to any one of Claim 3 to Claim 5 **characterized in that** the airbag comprises two or more the vent holes, and the vent hole cover is provided on at least one of the vent holes.

7. The passenger restraint system according to any one of Claims 3 to 6, **characterized in that** the vent hole cover and the airbag have an auxiliary cover (70) therebetween that covers the vent hole (22), and
when the vent hole (22) is blocked by the vent hole cover (25), the auxiliary cover (70) is pressed against the outer surface of the airbag (21) by the vent hole cover (25) so that the auxiliary cover (70) covers the vent hole, and
when the vent hole cover (25) is released from the vent hole (22), the auxiliary cover (70) is pushed by the gas pressure in the airbag and thus recedes from the outer surface of the airbag so that the vent hole becomes opened.

8. The passenger restraint system according to any one of Claims 3 to 7, **characterized in that** the vent hole (22) is connected to one end of a cylindrical nozzle (80), and
when the vent hole (22) is blocked by the vent hole cover (25), the nozzle (80) is disposed inside the airbag, and
when the vent hole cover (25) is released from the vent hole (22), the nozzle (80) is pushed by the gas pressure in the airbag so as to protrude outward from the airbag through the vent hole.

9. The passenger restraint system according to any one of Claims 3 to 8, **characterized in that** an inner cover (90) that covers the vent hole (22) from the inside of the airbag (21) is provided,
the inner cover (90) is connected to the vent hole cover (25) with the vent hole disposed therebetween,
when the vent hole (22) is blocked by the vent hole cover (25), the inner cover (90) covers the vent hole from the inside of the airbag, and
when the vent hole cover (25) is released from the vent hole (22), the inner cover (90) is pushed outward from the airbag through the vent hole (22) due to the gas pressure in the airbag so that the vent hole becomes opened.

10. The passenger restraint system according to any one of Claims 3 to 9, **characterized in that** the vent hole (22A) has a slit-like shape.

11. The passenger restraint system according to any one of Claims 1 to 10, **characterized in that** the detection means (6) for detecting the state of usage of the seat detects at least one of whether or not the passenger is seated on the seat, a weight of the passenger, and a posture of the passenger.

12. The passenger restraint system according to Claim 11, **characterized in that** the detection means for detecting the posture of the passenger detects a position of at least one of the head, chest, and shoulder of the passenger.

13. The passenger restraint system according to any one of Claim 1 to Claim 12, **characterized in that** the crash prediction means performs at least one of prediction of a direction of crash, prediction about whether the crash is full-lap crash or offset crash, prediction of a type of an object of crash, prediction of the size of the object of crash, prediction of a relative velocity of crash, and prediction of a relative acceleration of crash simultaneously with prediction of an occurrence of crash.

14. The passenger restraint system according to any one of Claim 1 to Claim 13, **characterized in that** the accident state detection means performs at least one of detection about whether the accident is crash or roll-over, detection of a portion of crash, detection of a type of crash, and detection of crash severity.
